# EUROPÄISCHE PATENTSCHRIFT

(11) **EP 3 760 492 B1**
(45) Veröffentlichungstag und Bekanntmachung des Hinweises auf die Patenterteilung: **25.01.2023**
(21) Anmeldenummer: 19184022.2
(22) Anmeldetag: 02.07.2019
(51) Int. Cl.: B60R 19/48, B60K 11/08

(54) **ANBINDUNGSSTRUKTUR ZUM ANBINDEN EINES AKTUATORS AN EINE ÖFFNUNGSKLAPPE ZUM ÖFFNEN UND SCHLIESSEN EINES AUSSENVERKLEIDUNGSBAUTEILS EINES KRAFTFAHRZEUGS, AUSSENVERKLEIDUNGSBAUTEIL MIT EINER DERARTIGEN ANBINDUNGSSTRUKTUR SOWIE KRAFTFAHRZEUG, UMFASSEND EIN SOLCHES AUSSENVERKLEIDUNGSBAUTEIL**
CONNECTING STRUCTURE FOR CONNECTING AN ACTUATOR TO AN OPENING FLAP FOR OPENING AND CLOSING AN EXTERNAL CLADDING COMPONENT OF A MOTOR VEHICLE, EXTERNAL CLADDING COMPONENT COMPRISING SUCH A CONNECTING STRUCTURE AND MOTOR VEHICLE COMPRISING SUCH AN EXTERNAL CLADDING COMPONENT
STRUCTURE DE RACCORDEMENT PERMETTANT DE RACCORDER UN ACTIONNEUR À UN CLAPET D'OUVERTURE DESTINÉ À L'OUVERTURE ET À LA FERMETURE D'UN COMPOSANT DE REVÊTEMENT EXTÉRIEUR D'UN VÉHICULE AUTOMOBILE, COMPOSANT DE REVÊTEMENT EXTÉRIEUR DOTÉ D'UNE TELLE STRUCTURE DE RACCORDEMENT AINSI QUE VÉHICULE AUTOMOBILE COMPRENANT UN TEL COMPOSANT DE REVÊTEMENT EXTERNE

(43) Veröffentlichungstag der Anmeldung: 06.01.2021
(73) Patentinhaber: Motherson Innovations Company Limited, London EC2N 2AX (GB)
(72) Erfinder: Durupt, Xavier, 68320 Jebsheim (FR)
(74) Vertreter: Westphal, Mussgnug & Partner Patentanwälte mbB

(56) Entgegenhaltungen:
- WO-A1-2017/046382
- DE-A1-102012 211 774
- FR-A1- 3 038 549
- JP-A- H06 298 132

## Beschreibung

Die vorliegende Erfindung betrifft eine Anbindungsstruktur zum Anbinden eines Aktuators an eine Öffnungsklappe zum Öffnen und Schließen eines Außenverkleidungsbauteils eines Kraftfahrzeugs. Weiterhin betrifft die Erfindung ein Außenverkleidungsbauteil mit einer derartigen Anbindungsstruktur sowie ein Kraftfahrzeug umfassend ein solches Außenverkleidungsbauteil.

Außenverkleidungsbauteile von Kraftfahrzeugen sind beispielsweise Stoßfänger, in welche immer mehr Komponenten des Kraftfahrzeugs integriert werden. Beispielsweise sind Abstandssensoren oder Scheinwerferreinigungsvorrichtungen in die Außenverkleidungsbauteile integriert. Zudem werden die Stoßfänger auch mit Luftklappen ausgestattet, beispielsweise, um luftgekühlte Ladeluftkühler zu betreiben. Je nach Ausgestaltung ist es dabei gewünscht, die Öffnungsklappe beispielsweise in Abhängigkeit des Betriebszustands des Kraftfahrzeugs zu öffnen oder zu schließen, wozu diese bewegbar an den Außenverkleidungsbauteilen befestigt sind. Zum Öffnen und Schließen der Öffnungsklappe sind die Außenverkleidungsbauteile mit Aktuatoren ausgestattet, mit welchen die Öffnungsklappen in geöffnet und geschlossen werden können.

In vielen Fällen sind die Außenverkleidungsbauteile aus Kunststoff gefertigt, wobei man zur Gewichtsreduzierung bestrebt ist, die Wandstärke der Außenverkleidungsbauteile immer weiter zu reduzieren. Selbiges gilt auch für die Öffnungsklappen. Bei bekannten Öffnungsklappen sind die Aktuatoren direkt an die Öffnungsklappen angebunden. Ein derartiges Außenverkleidungsbauteil ist in der US 2018/0264933 A1 offenbart. Insbesondere dann, wenn die Öffnungsklappen eine geringe Wandstärke aufweisen, besteht die Gefahr, dass die Oberfläche der Öffnungsklappe auf der Sichtseite, also der Seite, die von außen her sichtbar ist, beschädigt wird. Derartige Oberflächenschäden treten insbesondere dann auf, wenn die Öffnungsklappen als Luftklappen verwendet werden, welche bei hohen Geschwindigkeiten des Kraftfahrzeugs geöffnet und geschlossen werden. Aufgrund der dann wirkenden hohen aerodynamischen Kräfte kann es dazu kommen, dass sich die gesamte Öffnungsklappe verformt. In beiden Fällen wird das Gesamtbild der Außenverkleidungsbauteile und des mit diesen ausgestatteten Fahrzeug nachteilig beeinflusst. Die Öffnungsklappe muss dann gegen eine andere ausgetauscht werden. Ein derartiges Außenverkleidungsbauteil ist in der WO 2017/046382 A1 beschrieben. Weitere Außenverkleidungsbauteile mit einer Öffnungsklappe sind in der DE 10 2012 211 774 A1, der JP H06 298 132 A und der FR 3 038 549 A1 beschrieben.

Aufgabe einer Ausführungsform der vorliegenden Erfindung ist es, eine Anbindungsstruktur zum Anbinden eines Aktuators an eine Öffnungsklappe zum Öffnen und Schließen eines Außenverkleidungsbauteils eines Kraftfahrzeugs vorzuschlagen, mit welchem es mit einfachen und kostengünstigen Mitteln möglich ist, die oben genannten Nachteile zu beseitigen.

Des Weiteren liegt einer Ausgestaltung der vorliegenden Erfindung die Aufgabe zugrunde, die Anbindungsstruktur so auszugestalten, dass das mit derselben zusammenwirkende Außenverkleidungsbauteil auch bei hohen auf sie wirkenden aerodynamischen und anderen Kräften formstabil bleibt und sein Sichtseite eine hohe Oberflächenqualität beibehält, wobei die Gewichtszunahme begrenzt werden soll. Darüber hinaus liegt einer Verwirklichung der Erfindung die Aufgabe zugrunde, ein Kraftfahrzeug mit einem derartigen Außenverkleidungsbauteil bereitzustellen.

Diese Aufgabe wird mit den in den Ansprüchen 1, 7 und 14 angegebenen Merkmalen gelöst. Vorteilhafte Ausführungsformen sind Gegenstand der Unteransprüche.

Eine Ausführungsform der Erfindung betrifft eine Anbindungsstruktur zum Anbinden eines Aktuators an eine Öffnungsklappe zum Öffnen und Schließen eines Außenverkleidungsbauteils eines Kraftfahrzeugs, wobei die Anbindungsstruktur
- eine Öffnungsklappe umfasst und
- zumindest eine Trägeranordnung mit einer Anzahl von Trägern, die mit der Öffnungsklappe verbunden ist, und
- zumindest einen auf der Trägeranordnung angeordneten Verbindungsabschnitt aufweist, mit welchem die Öffnungsklappe mit dem Aktuator zum Bewegen der Öffnungsklappe verbindbar ist.

Unter einer Trägeranordnung soll eine Anzahl von Trägern verstanden werden, welche mit der Öffnungsklappe zusammenwirken können. Mithilfe der vorschlagsgemäßen Anbindungsstruktur kann die Öffnungsklappe versteift werden, so dass sie sich auch bei hohen Belastungen nicht verformt und ihre Oberfläche erhalten bleibt. Darüber hinaus bietet die Anbindungsstruktur die Möglichkeit, die Öffnungsklappe nur dort zu versteifen, wo es zum Bereitstellen der notwendigen Steifigkeit notwendig ist. Es ist daher nicht notwendig, die Wandstärke der gesamten Öffnungsklappe zu erhöhen, so dass die Erhöhung der Steifigkeit nicht mit einer übermäßigen Gewichtszunahme einhergeht.

Aufgrund der Tatsache, dass der Verbindungsabschnitt auf der Trägeranordnung angeordnet ist, wird die vom Aktuator auf die Öffnungsklappe aufgebrachte Kraft beim Verstellen der Öffnungsklappe über die Anbindungsstruktur gleichmäßig in die Öffnungsklappe eingeleitet, so dass sich die Öffnungsklappe selbst bei hohen Belastungen nicht verformt.

Bei einer weitergebildeten Ausführungsform kann die Öffnungsklappe von einer Außenkante begrenzt sein und die Trägeranordnung zumindest einen Außenträger aufweisen, der dem Verlauf der Außenkante folgt. Der Außenträger kann sich ganz oder teilweise entlang der Außenkante der Öffnungsklappe erstrecken, so dass dieser nicht nur die Steifigkeit der gesamten Öffnungsklappe erhöht, sondern auch die Kantensteifigkeit, so dass Beschädigungen an der Außenkante besonders effektiv vermieden werden.

Erfindungsgemäß ist die Öffnungsklappe von einer Außenkante begrenzt, wobei die Trägeranordnung zumindest einen Querträger aufweist, dessen beiden Enden im Bereich der Außenkante angeordnet sind. Der Querträger steigert die Stabilität der Trägeranordnung und daher die Steifigkeit der Öffnungsklappe besonders effektiv bei geringem Zusatzgewicht.

Eine weitergebildete Ausführungsform zeichnet sich dadurch aus, dass die Trägeranordnung zumindest einen Zusatzträger aufweist, dessen eines Ende im Bereich der Außenkante angeordnet ist. Der Zusatzträger kann sich in Bereiche der Öffnungsklappe erstrecken, die besonders hohen Belastungen ausgesetzt sind. Somit kann die Steifigkeit der Öffnungsklappe besonders zielgerichtet erhöht werden.

Nach Maßgabe einer weiteren Ausführungsform sind der Außenträger, der Querträger und/oder der Zusatzträger miteinander verbunden. Dadurch, dass die Außenträger, die Querträger und/oder die Zusatzträger miteinander verbunden sind, entsteht eine besonders verwendungssteife, fachwerkartige Trägeranordnung, welche der Öffnungsklappe eine besonders hohe Steifigkeit verleiht, ohne dass das Gewicht übermäßig zunimmt.

Gemäß einer weiteren Ausführungsform ist auf dem Außenträger, dem Querträger und/oder dem Zusatzträger zumindest eine Versteifungsrippe angeordnet. Versteifungsrippen eignen sich in besonderem Maße, der Trägeranordnung und folglich der Öffnungsklappe eine hohe Stabilität zu verleihen, ohne dass das Gewicht übermäßig zunimmt.

Eine weitere Ausführungsform gibt vor, dass der Verbindungsabschnitt ein Drehgelenk oder ein Kugelgelenk umfasst, mit welchem die Öffnungsklappe mit dem Aktuator zum Bewegen der Öffnungsklappe verbindbar ist. Aufgrund der Tatsache, dass die Öffnungsklappe dem Fahrtwind und somit aerodynamischen Kräften ausgesetzt ist, sind Kräfte vorhanden, welche die Öffnungsklappe üblicherweise in die Offenstellung verstellt. Insofern kann es genügen, den Aktuator mit einem Exzenterkörper zu versehen, der an der Öffnungsklappe anliegt und je nach Drehstellung zwischen der Offenstellung und der Schließstellung verstellt. Folglich werden nur Druckkräfte, aber keine Zugkräfte zwischen dem Aktuator und der Öffnungsklappe übertragen. Wenn sich aber die Öffnungsklappe am Außenverkleidungsbauteil verklemmen sollte und/oder die aerodynamischen Kräfte zu gering sind, um die Öffnungsklappe in die Offenstellung zu bewegen, bleibt die Öffnungsklappe in einer Zwischenstellung stehen.

Mithilfe des Drehgelenks oder des Kugelgelenks kann der Aktuator dauerhaft mit der Verbindungsstruktur verbunden werden, so dass ein definiertes Bewegen zwischen der Offenstellung und der Schließstellung möglich ist. Insbesondere können nicht nur Druckkräfte, sondern auch Zugkräfte zwischen dem Aktuator und der Öffnungsklappe übertragen werden. Mit einem Drehgelenk ist eine Drehung zwischen dem Aktuator und der Anbindungsstruktur um eine festgelegte Drehachse möglich. Insofern müssen die Anordnung des Aktuators und der Verlauf der Drehachse aufeinander abgestimmt werden. Bei einem Kugelgelenk ist die Drehachse nicht festgelegt, so dass die Anordnung des Aktuators weitgehend frei gewählt werden kann.

Eine Ausgestaltung der Erfindung betrifft ein Außenverkleidungsbauteil eines Kraftfahrzeugs, umfassend
- eine Öffnungsklappe,
   o welche vom Außenverkleidungsbauteil gebildet wird und relativ zum Außenverkleidungsbauteil bewegbar ist, oder
   o welche mittels des Übergangsabschnitts bewegbar am Außenverkleidungsbauteil befestigt und in einem Durchbruch des Außenverkleidungsbauteils angeordnet ist,
- einen Aktuator, mit welchem die Öffnungsklappe (16) zwischen einer Offenstellung, in welcher die Öffnungsklappe das Verkleidungsbauteil oder den Durchbruch öffnet, und einer Schließstellung, in welcher die Öffnungsklappe das Außenverkleidungsbauteil oder den Durchbruch verschließt, bewegbar ist, wobei
- das Außenverkleidungsbauteil eine Anbindungsstruktur nach einem der vorherigen Ausführungsformen aufweist, die mit der Öffnungsklappe zusammenwirkt, und
- der Aktuator mittels des Verbindungsabschnitts mit der Anbindungsstruktur verbunden ist.

Die technischen Effekte und Vorteile, die sich mit dem vorschlagsgemäßen Außenverkleidungsbauteil erreichen lassen, entsprechen denjenigen, die für die vorliegende Anbindungsstruktur erörtert worden sind. Zusammenfassend sei darauf hingewiesen, dass es ohne eine nennenswerte Gewichtszunahme möglich ist, die Steifigkeit der Öffnungsklappe zu erhöhen. Hierdurch werden Verformungen der Öffnungsklappe auch bei hohen Belastungen vermieden, so dass das gewünschte optische Erscheinungsbild der Öffnungsklappe auch nach längeren Betriebszeiten erhalten bleibt.

In einer weitergebildeten Ausgestaltung umfasst die Öffnungsklappe einen flächigen Grundkörper mit einer ersten Seite und einer zweiten Seite, die erste Seite eine von außen sichtbare Sichtseite bildet und die Trägeranordnung mit der zweiten Seite mit dem Grundkörper verbunden ist.

Prinzipiell ist es zum Erhöhen der Steifigkeit der Öffnungsklappe unerheblich, ob die Anbindungsstruktur auf der Sichtseite oder auf der zum Innern des Kraftfahrzeugs hin zeigenden zweiten Seite angeordnet ist. Allerdings bietet es sich aus optischen Gründen an, die Anbindungsstruktur auf der zweiten Seite der Öffnungsklappe anzuordnen, welche der Sichtseite gegenüberliegt. Folglich muss die Anbindungsstruktur nicht in das Design des Außenverkleidungsbauteils integriert werden.

Gemäß einer weiteren Ausgestaltung ist die Trägeranordnung durch Kleben, Verschweißen oder Verklipsen mit der zweiten Seite mit dem Grundkörper verbunden. Auf diese Weise kann die Anbindung der Anbindungsstruktur an die Öffnungsklappe auf einfache Weise umgesetzt werden.

In einer weitergeführten Ausgestaltung wird die Öffnungsklappe von einer Außenkante begrenzt, wobei die Trägeranordnung die Außenkante formschlüssig umgreift. In dieser Ausführungsform wird eine formschlüssige Verbindung zwischen der Trägeranordnung und der Öffnungsklappe geschaffen, die auch von der Sichtseite her zumindest teilweise sichtbar ist. Der sichtbare Teil kann als Zierleiste oder dergleichen ausgebildet werden, wodurch die Öffnungsklappe optisch vom übrigen Außenverkleidungsbauteil abgesetzt werden kann.

Bei einer weitergebildeten Ausgestaltung ist die Trägeranordnung abschnittsweise mit dem Grundkörper verbunden. Insbesondere dann, wenn die Öffnungsklappe nicht als separates Bauteil ausgeführt ist, sondern vom Außenverkleidungsbauteil gebildet wird, wird die Öffnungsklappe beim Bewegen zumindest bereichsweise verformt. In dieser Ausführungsform ist die Trägeranordnung nur dort mit der Öffnungsklappe verbunden, wo letztere nicht oder nur in geringem Umfang verformt wird. Hierdurch ist sichergestellt, dass beim Bewegen keine zusätzlichen Spannungen in die Öffnungsklappe eingetragen werden, wodurch verhindert wird, dass die Sichtseite der Öffnungsklappe beschädigt wird. Zudem wird die Verbindung beim Bewegen der Öffnungsklappe nicht zusätzlich belastet, so dass ihre Zuverlässigkeit erhalten bleibt.

Eine weitere Ausgestaltung zeichnet sich dadurch aus, dass die Anbindungsstruktur zumindest einen Aufnahmeabschnitt für Komponenten des Kraftfahrzeugs aufweist. Wie eingangs erwähnt, werden immer mehr Komponenten, insbesondere Sensoren, in den Stoßfänger des Kraftfahrzeugs verlegt. In dieser Ausführungsform kann die vorschlagsgemäße Öffnungsklappe zur Aufnahme von Komponenten des Kraftfahrzeugs verwendet werden. Zusätzliche Maßnahmen zum Befestigen dieser Komponenten am Stoßfänger müssen nicht getroffen werden.

In einer weitergebildeten Ausgestaltung kann das Außenverkleidungsbauteil als ein Stoßfänger und die Öffnungsklappe als Luftklappe ausgebildet sein. Wie eingangs erwähnt, können Ladeluftkühler auch mit Luft gekühlt werden. Hierzu ist es notwendig, einen entsprechend hohen Volumenstrom der Umgebungsluft auf den Ladeluftkühler zu leiten. Entsprechend groß muss der Durchbruch im Außenverkleidungsbauteil dimensioniert sein. Darüber hinaus muss es möglich sein, die Luftklappe ausreichend weit zu öffnen. Infolgedessen sind die Belastungen auf die Luftklappe besonders hoch. Die vorschlagsgemäße Öffnungsklappe hält auch diesen Belastungen stand, ohne dass hierzu eine nennenswerte Gewichtszunahme notwendig ist. Insbesondere in dieser Ausgestaltung ist es nicht zwingend notwendig, die Trägeranordnung dauerhaft mit der Luftklappe zu verbinden. Vielmehr genügt es, die Trägeranordnung so mit der Luftklappe zusammenwirken zu lassen, dass Druckkräfte übertragen werden können, was mit einer Berührung zwischen der Anbindungsstruktur und der Luftklappe realisiert werden kann. Zugkräfte müssen nicht übertragbar sein. Der Aktuator stellt die Luftklappe infolge einer entsprechenden Bewegung der Anbindungsstruktur in die Schließstellung und hält sie dort. Soll die Luftklappe in die Offenstellung gestellt werden, so wird die Anbindungsstruktur zurückgefahren. Die auf die Luftklappe wirkenden aerodynamischen Kräfte stellen die Luftklappe in die Offenstellung.

Eine Verwirklichung der Erfindung betrifft ein Kraftfahrzeug, umfassend ein Außenverkleidungsbauteil nach einem der zuvor erläuterten Ausgestaltungen.

Die technischen Effekte und Vorteile, die sich mit dem vorschlagsgemäßen Außenverkleidungsbauteil erreichen lassen, entsprechen denjenigen, die für die vorliegende Öffnungsklappe erörtert worden sind. Zusammenfassend sei darauf hingewiesen, dass es ohne eine nennenswerte Gewichtszunahme möglich ist, die Steifigkeit der Öffnungsklappe zu erhöhen. Hierdurch werden Verformungen der Öffnungsklappe auch bei hohen Belastungen vermieden, so dass das gewünschte optische Erscheinungsbild der Öffnungsklappe auch nach längeren Betriebszeiten erhalten bleibt.

Beispielhafte Ausführungsformen der Erfindung werden im Folgenden unter Bezugnahme auf die beigefügten Zeichnungen näher erläutert. Es zeigen
- Figur 1A: eine prinzipielle Vorderansicht eines Kraftfahrzeugs, welches ein Außenverkleidungsbauteil mit einer Öffnungsklappe aufweist,
- Figur 1B: eine separate Darstellung der in Figur 1A dargestellten Öffnungsklappe,
- Figur 1C: eine Schnittdarstellung durch das Außenverkleidungsbauteil entlang der in Figur 1A definierten Schnittebene X-X,
- Figur 2A: eine Draufsicht auf ein erstes Ausführungsbeispiel einer auf einer Öffnungsklappe befestigten Anbindungsstruktur,
- Figur 2B: eine Draufsicht auf ein zweites Ausführungsbeispiel einer auf einer Öffnungsklappe befestigten Anbindungsstruktur,
- Figur 2C: eine Draufsicht auf ein drittes Ausführungsbeispiel einer auf einer Öffnungsklappe befestigten Anbindungsstruktur,
- Figur 2D: eine Draufsicht auf ein viertes Ausführungsbeispiel einer auf einer Öffnungsklappe befestigten Anbindungsstruktur,
- Figur 3A: eine Draufsicht auf ein fünftes Ausführungsbeispiel einer auf einer Öffnungsklappe befestigten Anbindungsstruktur,
- Figur 3B: eine Schnittdarstellung entlang der in Figur 3A definierten Schnittebene Y-Y,
- Figur 4A: eine Draufsicht auf ein sechstes Ausführungsbeispiel einer auf einer Öffnungsklappe befestigten Anbindungsstruktur, und
- Figur 4B: eine Schnittdarstellung entlang der in Figur 4A definierten Schnittebene Z-Z,
- Figur 5: eine prinzipielle Schnittdarstellung durch ein siebtes Ausführungsbeispiel einer Öffnungskappe und einer Anbindungsstruktur, und
- Figur 6: eine prinzipielle Schnittdarstellung durch ein achtes Ausführungsbeispiel einer Öffnungskappe und einer Anbindungsstruktur.

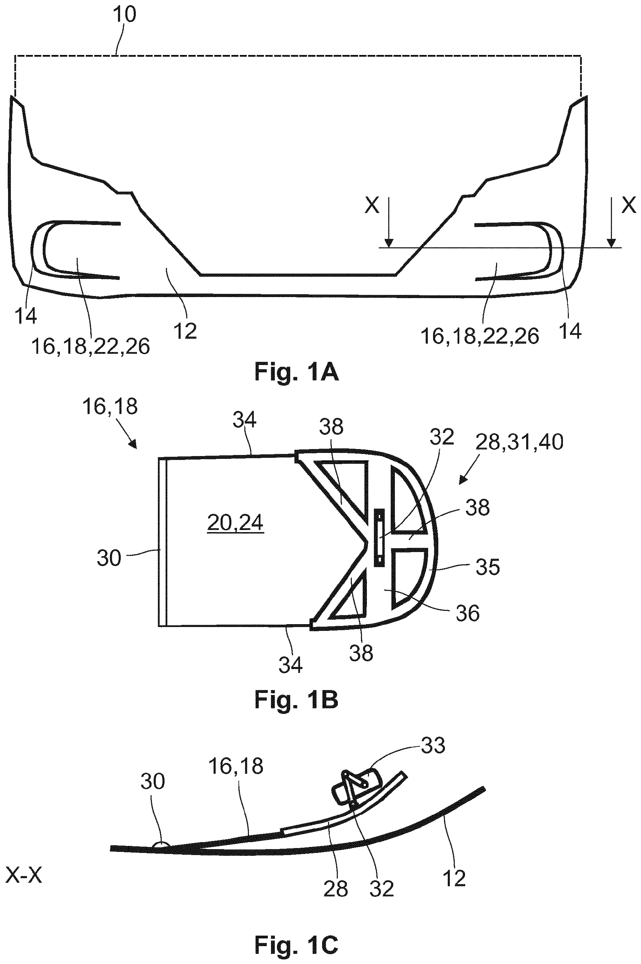

In Abbildung 1 ist ein Kraftfahrzeug 10 anhand einer Vorderansicht dargestellt, welches ein Außenverkleidungsbauteil 12 umfasst. Das Außenverkleidungsbauteil 12 umfasst zwei Öffnungsklappen 16, die vom Außenverkleidungsbauteil 12 gebildet werden. Hierzu weist das Außenverkleidungsbauteil 12 entsprechende Einschnitte 14 auf. Die Öffnungsklappen 16 sind so ausgebildet, dass sie relativ zum übrigen Außenverkleidungsbauteil 12 bewegbar sind. In Figur 1A ist die Öffnungsklappe 16 als eine Luftklappe 18 ausgestaltet, so dass dann, wenn sich die Luftklappe 18 in einer Offenstellung befindet, der in Figur 1A dargestellt ist, Luft in das Innere des Außenverkleidungsbauteils 12 geführt werden kann. Dort kann die Luft beispielsweise zum Kühlen eines hier nicht dargestellten Ladeluftkühlers verwendet werden.

In Figur 1B ist die Öffnungsklappe 16 anhand einer Draufsicht separat dargestellt. Die Öffnungsklappe 16 weist einen flächigen Grundkörper 20 auf, welcher eine erste Seite 22 und eine zweite Seite 24 umfasst. Die erste Seite 22 des Grundkörpers 20 ist die Sichtseite 26, welche von außen her sichtbar ist. In Figur 1A schaut man auf die Sichtseite 26 des Grundkörpers 20, während man in Figur 1B auf die zweite Seite 24 schaut. Auf der zweiten Seite 24 des Grundkörpers 20 ist eine Anbindungsstruktur 28 angeordnet, welche insbesondere zur Versteifung des Grundkörpers 20 dient.

Aufgrund der Tatsache, dass die Öffnungsklappe 16 vom Verkleidungsbauteil 12 gebildet wird, bildet die Öffnungsklappe 16 einen Übergangsabschnitt 30, in welchem die Öffnungsklappe 16 gebogen und somit relativ zum übrigen Verkleidungsbauteil 12 bewegt werden kann. Auf der Anbindungsstruktur 28 ist ein Verbindungsabschnitt 32 angeordnet, mit welchem die Öffnungsklappe 16 mit einem Aktuator 33 (siehe Figur 1C) verbindbar ist, mit dem die Öffnungsklappe 16 zwischen einer Offenstellung und einer Schließstellung bewegbar ist.

Die Öffnungsklappe 16 weist eine Außenkante 34 auf, welche den Grundkörper 20 begrenzt. Die Anbindungsstruktur 28 umfasst eine Trägeranordnung 31 mit einen Außenträger 35, welcher im Wesentlichen dem Verlauf der Außenkante 34 folgt. Darüber hinaus umfasst die Trägeranordnung 31 der Anbindungsstruktur 28 einen Querträger 36, der mit seinen beiden Enden im Bereich der Au-βenkante 34 angeordnet ist. Darüber hinaus weist die Trägeranordnung 31 drei Zusatzträger 38 auf, deren jeweiliges eine Ende im Bereich der Außenkante 34 angeordnet ist und die von dort aus zum Inneren des Grundkörpers 20 verlaufen. Der Außenträger 35, der Querträger 36 und die Zusatzträger 38 sind miteinander verbunden, so dass diese ein Fachwerk 40 bilden. Der Verbindungsabschnitt 32 ist im dargestellten Beispiel am Querträger 36 angeordnet, während der Übergangsabschnitt 30 beabstandet von der Anbindungsstruktur 28 auf dem Grundkörper 20 angeordnet ist.

Figur 1C zeigt einen Querschnitt durch das Außenverkleidungsbauteil 12 entlang der in Figur 1A definierten Schnittebene X-X. Man erkennt, dass die Öffnungsklappe 16 im Übergangsabschnitt 30 biegbar und folglich gegenüber dem übrigen Außenverkleidungsbauteil 12 bewegbar ist. Zudem ist der Aktuator 33 erkennbar, mit welchem die Öffnungsklappe 16 zwischen der Offenstellung und der Schließstellung bewegt werden kann. Der Aktuator 33 ist über den auf der Anbindungsstruktur 28₁ angeordneten Verbindungsabschnitt 32 an die Öffnungsklappe 16 angebunden. Der Aktuator 33 kann beispielsweise über ein nicht dargestelltes Steuerungssystem des Kraftfahrzeugs 10 je nach Betriebszustand aktiviert werden, um somit die Öffnungsklappe 16 zwischen der Offenstellung und der Schließstellung zu bewegen.

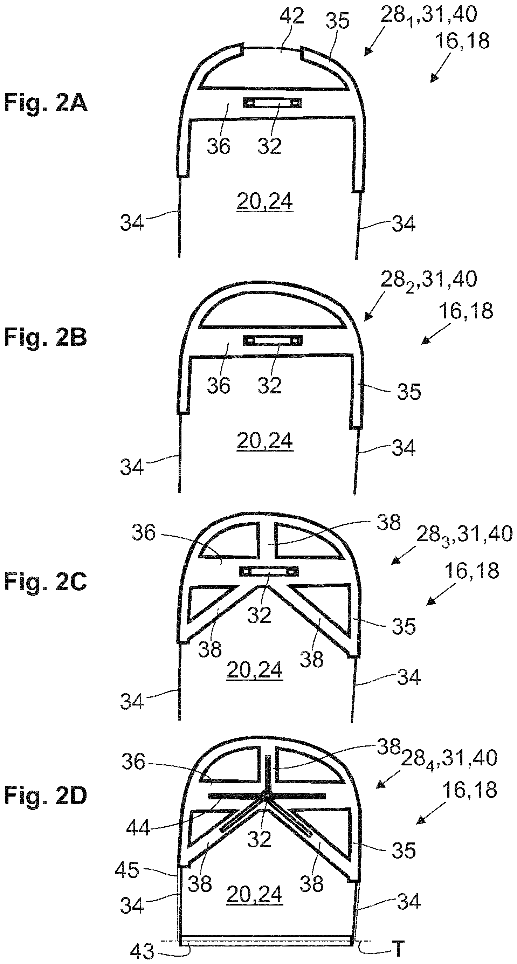

In den Figuren 2A bis 2D sind vier verschiedene Ausführungsformen der erfindungsgemäßen Anbindungsstruktur 28₁ - 28₄ jeweils anhand einer Draufsicht auf die zweite Seite 24 der Öffnungsklappe 16 gezeigt. Im ersten Ausführungsbeispiel der Anbindungsstruktur 28₁, welches in Figur 2A dargestellt ist, umfasst die Anbindungsstruktur 28₁ den bereits erwähnten Querträger 36 und den ebenfalls bereits erwähnten Außenträger 35, wobei der Außenträger 35 einen Aufnahmeabschnitt 42 bildet, in welchem eine Komponente des Kraftfahrzeugs 10, beispielsweise ein Abstandssensor oder eine Verkabelung, angeordnet werden kann. Im ersten Ausführungsbeispiel ist der Verbindungsabschnitt 32 auf dem Querträger 36 angeordnet.

In Figur 2B ist ein zweites Ausführungsbeispiel der Anbindungsstruktur 28₂ gezeigt, welches weitgehend dem ersten Ausführungsbeispiel der Anbindungsstruktur 28₁ entspricht, allerdings bildet der Außenträger 35 in diesem Fall keinen Aufnahmeabschnitt 42.

In Figur 2C ist ein drittes Ausführungsbeispiel der erfindungsgemäßen Anbindungsstruktur 28₃ gezeigt, welches weitgehend der Anbindungsstruktur 28 entspricht, die in den Figuren 1A bis 1C dargestellt ist. Die Anbindungsstruktur 28₃ nach dem dritten Ausführungsbeispiel weist insgesamt drei Zusatzträger 38 auf, die in etwa Y-förmig jeweils zwischen dem Außenträger 35 und dem Querträger 36 verlaufen. Der Außenträger 35, der Querträger 36 und die Zusatzträger 38 bilden in diesem Ausführungsbeispiel ein Fachwerk 40. Im ersten, zweiten und dritten Ausführungsbeispiel der Anbindungsstruktur 28₃ ist der Verbindungsabschnitt 32 auf dem Querträger 36 angeordnet.

Figur 2D zeigt ein viertes Ausführungsbeispiel der erfindungsgemäßen Anbindungsstruktur 28₄, welche weitgehend dem dritten Ausführungsbeispiel entspricht. Zusätzlich sind jedoch Versteifungsrippen 44 vorgesehen, welche der Trägeranordnung 31 eine zusätzliche Steifigkeit verleihen. Darüber hinaus ist in diesem Ausführungsbeispiel die Öffnungsklappe 16 als ein separates Bauteil ausgeführt und mittels eines scharnierartigen Befestigungselements 43 in einem Durchbruch 45 des Verkleidungsbauteils 12 an diesem befestigt. Das Befestigungselement 43 ist dabei so ausgestaltet, dass die Öffnungsklappe 16 nicht, wie bei den übrigen Ausführungsbeispielen, beim Bewegen zwischen der Offenstellung und der Schließstellung im Übergangsabschnitt 30 gebogen, sondern um eine Drehachse T gedreht wird. In der Offenstellung ist der Durchbruch 45 geöffnet, während in der Schließstellung der Durchbruch 45 geschlossen ist.

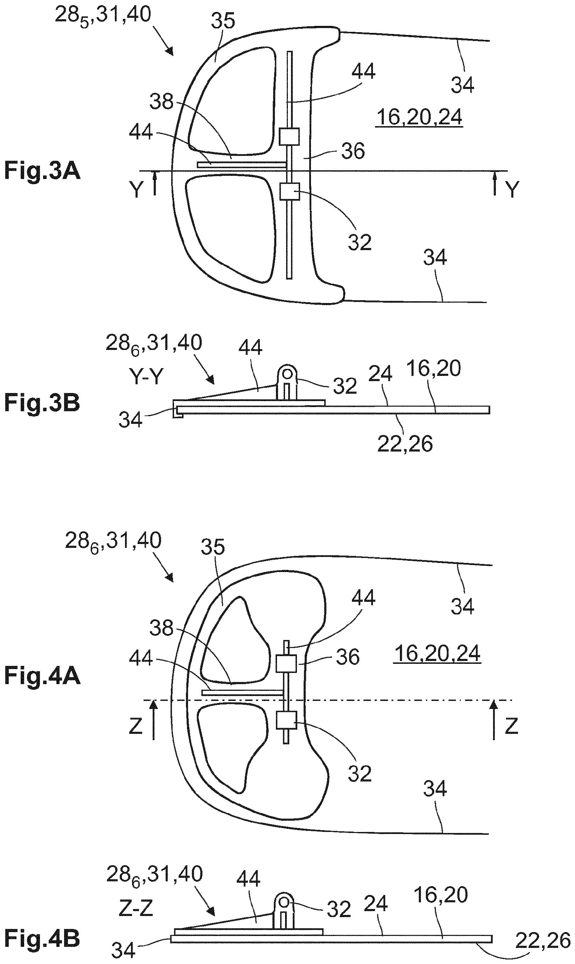

In Figur 3A ist ein fünftes Ausführungsbeispiel der erfindungsgemäßen Anbindungsstruktur 28₅ anhand einer Draufsicht und in Figur 3B anhand einer Schnittdarstellung entlang der in Figur 3A definierten Schnittebene Y-Y gezeigt. Wie insbesondere aus der Figur 3B hervorgeht, umgreift in diesem Fall der Au-ßenträger 35 die Außenkante 34 der Öffnungsklappe 16, so dass eine formschlüssige Verbindung zwischen der Trägeranordnung 31 und der Öffnungsklappe 16 entsteht. Daher ist ein Teil des Au-ßenträgers 35 von der Sichtseite 26 her sichtbar. Dieser Teil kann beispielsweise als Zierleiste ausgeführt sein, um die Öffnungsklappe 16 gegenüber dem übrigen Außenverkleidungsbauteil 12 abzuheben. Die in den Figuren 2A bis 2D dargestellten Ausführungsformen der Anbindungsstruktur 28₁ bis 28₄ können auf diese Weise mit der Öffnungsklappe 16 verbunden sein.

Zudem ist aus den Figuren 3A und 3B zu erkennen, dass auch im fünften Ausführungsbeispiel die Anbindungsstruktur 28₅ die bereits erwähnten Versteifungsrippen 44 aufweist, die in diesem Ausführungsbeispiel auf dem Querträger 36 und dem Zusatzträger 38 angeordnet sind.

In den Figuren 4A und 4B ist ein sechstes Ausführungsbeispiel der erfindungsgemäßen Anbindungsstruktur 28₆ analog zu den Darstellungen der Figur 3A und 3B gezeigt. In diesem Fall ist die Anbindungsstruktur 28₆ auf der zweiten Seite 24 mit der Öffnungsklappe verbunden, beispielsweise durch Verkleben, Verschweißen oder Verklipsen. Die Anbindungsstruktur 28₆ ist daher von der ersten Seite 22 her nicht zu sehen.

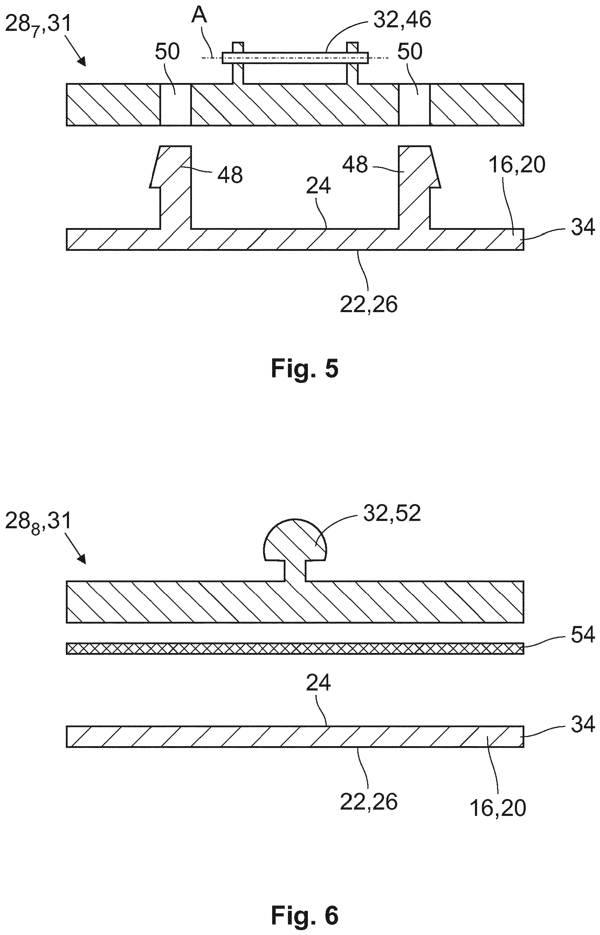

In Figur 5 ist ein siebtes Ausführungsbeispiel einer Anbindungsstruktur 28₇ und einer Öffnungsklappe 16 anhand einer prinzipiellen Schnittdarstellung gezeigt. Der Verbindungsabschnitt 32 ist in Form eines Drehgelenks 46 ausgeführt, so dass der Aktuator 33 (hier nicht dargestellt) um eine festgelegte Drehachse A drehbar mit der Öffnungsklappe 16 verbunden werden kann. Im verbundenen Zustand können sowohl Zug- als auch Druckkräfte zwischen dem Aktuator 33 und der Öffnungsklappe 16 übertragen werden.

Weiterhin ist die Anbindungsstruktur 28₇ in diesem Fall mittels einer formschlüssigen Verbindung mit der Öffnungsklappe 16 verklipst. Hierzu weist die Öffnungsklappe 16 eine Anzahl von Vorsprüngen 48 auf, die eine Hinterschneidung bilden. Die Vorsprünge 48 werden durch entsprechende Durchgangsöffnungen 50 er Anbindungsstruktur 28₇ geführt. Die Vorsprünge 48 weisen eine gewisse Elastizität auf, so dass sie insbesondere im Bereich, der die Hinterschneidungen bildet, beim Durchführen durch die Durchgangsöffnungen 50 etwas gestaucht werden. Liegt die Anbindungsstruktur 27 an der Öffnungsklappe 16 an, kehren die gestauchten Bereiche in ihre Ausgangsstellung zurück, wodurch der Formschluss realisiert wird.

In Figur 6 ist ein achtes Ausführungsbeispiel einer Anbindungsstruktur 28₈ ebenfalls anhand einer prinzipiellen Schnittdarstellung gezeigt. In diesem Fall ist der Verbindungsabschnitt 32 in Form eines Kugelgelenks 52 ausgeführt, so dass der Aktuator 33 um eine beliebige Achse drehbar mit der Öffnungsklappe 16 verbunden werden kann. Auch in diesem Fall können sowohl Zug- als auch Druckkräfte zwischen dem Aktuator 33 und der Öffnungsklappe 16 übertragen werden. Weiterhin ist die Anbindungsstruktur 28₈ in diesem Fall mittels eines Klebers 54 an der Öffnungsklappe 16 befestigt.

Nicht dargestellt ist eine Ausführungsform, in welcher der Verbindungsabschnitt 32 nach Art eines Faltenbalgs ausgebildet ist, der ein Drehgelenk bildet. Die Anbindungsstruktur 28 kann beispielsweise mittels eines 2K-Spritzgussverfahrens hergestellt werden, wobei der Faltenbalg mit einem gummiartigen Kunststoff dargestellt wird.

### Bezugszeichenliste

- 10: Kraftfahrzeug
- 12: Außenverkleidungsbauteil
- 14: Einschnitt
- 16: Öffnungsklappe
- 18: Luftklappe
- 20: Grundkörper
- 22: erste Seite
- 24: zweite Seite
- 26: Sichtseite
- 28: Anbindungsstruktur
- 28₁ -: 28₈ Anbindungsstruktur
- 30: Übergangsabschnitt
- 31: Trägeranordnung
- 32: Verbindungsabschnitt
- 33: Aktuator
- 34: Außenkante
- 35: Außenträger
- 36: Querträger
- 38: Zusatzträger
- 40: Fachwerk
- 42: Aufnahmeabschnitt
- 43: Befestigungselement
- 44: Versteifungsrippe
- 45: Durchbruch
- 46: Drehgelenk
- 48: Vorsprung
- 50: Durchgangsöffnung
- 52: Kugelgelenk
- 54: Kleber
- A: Drehachse
- T: Drehachse

## Patentansprüche

1. Anbindungsstruktur (28) zum Anbinden eines Aktuators (33) an eine Öffnungsklappe (16) zum Öffnen und Schließen eines Außenverkleidungsbauteils (12) eines Kraftfahrzeugs (10), wobei die Anbindungsstruktur (28)
- eine Öffnungsklappe (16) umfasst und
- zumindest eine Trägeranordnung (31) mit einer Anzahl von Trägern, die mit der Öffnungsklappe (16) verbunden ist, und
- zumindest einen auf der Trägeranordnung (31) angeordneten Verbindungsabschnitt (32) aufweist, mit welchem die Öffnungsklappe (16) mit dem Aktuator (33) zum Bewegen der Öffnungsklappe (16) verbindbar ist,
**dadurch gekennzeichnet, dass** die Öffnungsklappe (16) von einer Außenkante (34) begrenzt wird und die Trägeranordnung (31) zumindest einen Querträger (36) aufweist, dessen beiden Enden im Bereich der Außenkante (34) angeordnet sind.

2. Anbindungsstruktur (28) nach Anspruch 1,
**dadurch gekennzeichnet, dass** die Öffnungsklappe (16) von einer Außenkante (34) begrenzt wird und die Trägeranordnung (31) zumindest einen Außenträger (35) aufweist, der dem Verlauf der Außenkante (34) folgt.

3. Anbindungsstruktur (28) nach Anspruch 2,
**dadurch gekennzeichnet, dass** die Trägeranordnung (31) zumindest einen Zusatzträger (38) aufweist, dessen eines Ende im Bereich der Außenkante (34) angeordnet ist.

4. Anbindungsstruktur (28) nach den Ansprüchen 2 oder 3,
**dadurch gekennzeichnet, dass** der Außenträger (35), der Querträger (36) und/oder der Zusatzträger (38) miteinander verbunden sind.

5. Anbindungsstruktur (28) nach Anspruch 4,
**dadurch gekennzeichnet, dass** auf dem Außenträger (35), dem Querträger (36) und/oder dem Zusatzträger (38) zumindest eine Versteifungsrippe (44) angeordnet ist.

6. Anbindungsstruktur (28) nach einem der vorherigen Ansprüche,
**dadurch gekennzeichnet, dass** der Verbindungsabschnitt (34) ein Drehgelenk oder ein Kugelgelenk umfasst, mit welchem die Öffnungsklappe (16) mit dem Aktuator (33) zum Bewegen der Öffnungsklappe (16) verbindbar ist.

7. Außenverkleidungsbauteil (12) eines Kraftfahrzeugs (10), umfassend
- eine Öffnungsklappe (16),
o welche vom Außenverkleidungsbauteil (12) gebildet wird und relativ zum Außenverkleidungsbauteil (12) bewegbar ist, oder
o welche mittels eines Befestigungselements (43) bewegbar am Außenverkleidungsbauteil (12) befestigt und in einem Durchbruch (45) des Außenverkleidungsbauteils (12) angeordnet ist,
- einen Aktuator (33), mit welchem die Öffnungsklappe (16) zwischen einer Offenstellung, in welcher die Öffnungsklappe (16) das Verkleidungsbauteil oder den Durchbruch (45) öffnet, und einer Schließstellung, in welcher die Öffnungsklappe (16) das Außenverkleidungsbauteil (12) oder den Durchbruch (45) verschließt, bewegbar ist,
**dadurch gekennzeichnet, dass**
- das Außenverkleidungsbauteil eine Anbindungsstruktur (28) nach einem der vorherigen Ansprüche aufweist, die mit der Öffnungsklappe (16) zusammenwirkt, und
- der Aktuator (33) mittels des Verbindungsabschnitts (32) mit der Anbindungsstruktur (28) verbunden ist.

8. Außenverkleidungsbauteil (12) nach Anspruch 7,
**dadurch gekennzeichnet, dass** die Öffnungsklappe (16)
- einen flächigen Grundkörper (20) mit einer ersten Seite (22) und einer zweiten Seite (24) umfasst,
- die erste Seite (22) eine von außen sichtbare Sichtseite (26) bildet und
- die Trägeranordnung (31) mit der zweiten Seite (24) mit dem Grundkörper (20) verbunden ist.

9. Außenverkleidungsbauteil (12) nach Anspruch 7,
**dadurch gekennzeichnet, dass** die Trägeranordnung (31) durch Kleben, Verschweißen oder Verklipsen mit der zweiten Seite (24) mit dem Grundkörper (20) verbunden ist.

10. Außenverkleidungsbauteil (12) nach Anspruch 7,
**dadurch gekennzeichnet, dass** die Öffnungsklappe (16) von einer Außenkante (34) begrenzt wird und die Trägeranordnung (31) die Außenkante (34) formschlüssig umgreift.

11. Außenverkleidungsbauteil (12) nach einem der Ansprüche 7 bis 10,
**dadurch gekennzeichnet, dass** die Trägeranordnung (31) abschnittsweise mit dem Grundkörper (20) verbunden ist.

12. Außenverkleidungsbauteil (12) nach einem der Ansprüche 7 bis 11,
**dadurch gekennzeichnet, dass** die Anbindungsstruktur (28) zumindest einen Aufnahmeabschnitt (42) für Komponenten des Kraftfahrzeugs (10) aufweist.

13. Außenverkleidungsbauteil (12) nach einem der Ansprüche 7 bis 12,
**dadurch gekennzeichnet, dass** das Außenverkleidungsbauteil (12) als ein Stoßfänger und die Öffnungsklappe (16) als Luftklappe (18) ausgebildet sind.

14. Kraftfahrzeug (10), umfassend ein Außenverkleidungsbauteil (12) nach einem der Ansprüche 7 bis 13.

## Claims

1. Connection structure (28) for connecting an actuator (33) to an opening flap (16) for the opening and closing of an exterior cladding component (12) of a motor vehicle (10), wherein the connection structure (28) comprises
- an opening flap (16) and
- at least one support arrangement (31) having numerous supports and which is connected to the opening flap (16), and
- at least one connection segment (32), arranged on the support arrangement (31) and by means of which the opening flap (16) can be connected to the actuator (33) in order to move the opening flap (16),
**characterized in that** the opening flap (16) is delimited by an outer edge (34), and **in that** the support arrangement (31) comprises at least one transverse support (36), the two ends of which are arranged in the region of the outer edge (34).

2. Connection structure (28) in accordance with claim 1,
**characterized in that** the opening flap (16) is delimited by an outer edge (34) and **in that** the support arrangement (31) comprises at least one outside support (35) which extends along the course of the outer edge (34).

3. Connection structure (28) in accordance with claim 2,
**characterized in that** the support arrangement (31) comprises at least one additional support (38), one end of which is arranged in the region of the outer edge (34).

4. Connection structure (28) in accordance with the claims 2 or 3,
**characterized in that** the outer support (35), the transverse support (36) and/or the additional support (38) are connected to each other.

5. Connection structure (28) in accordance with claim 4,
**characterized in that** at least one reinforcing rib (44) is arranged on the outer support (35), on the transverse support (36) and/or on the additional support (38).

6. Connection structure (28) in accordance with any of the preceding claims, **characterized in that** the connection segment (32) comprises a rotating joint or a ball joint by means of which the opening flap (16) can be connected to the actuator (33) in order to move the opening flap (16).

7. Exterior cladding component (12) of a motor vehicle (10),
comprising
- an opening flap (16),
o which is formed by the exterior cladding component (12) and which is moveable relative to the exterior cladding component (12), or
o which is moveable attached to the exterior cladding component (12) by means of an attachment element (43) and which is arranged in an aperture (45) of the exterior cladding component (12)
- an actuator (33), by means of which the opening flap (16) can be moved between an open position, in which the opening flap (16) opens the exterior cladding component (12) or the aperture (45), and a closed position, in which the opening flap (16) closes the exterior cladding component (12) or the aperture (45),
**characterized in that**
- the exterior cladding component comprises a connection structure (28), in accordance with any of the preceding claims, which interacts with the opening flap (16), and
- the actuator (33) is connected to the connection structure (28) by means of the connection segment (32).

8. Exterior cladding component (12) in accordance with claim 7,
**characterized in that** the opening flap (16)
- comprises a flat main body (20) which has a first side (22) and a second side (24),
- the first side (22) forms a visible side (26) which is visible from the outside, and
- the support arrangement (31) is connected to the second side (24) of the main body (20).

9. Exterior cladding component (12) in accordance with claim 7,
**characterized in that** the support arrangement (31) is connected to the second side (24) of the main body (20) by means of gluing, welding or clipping.

10. Exterior cladding component (12) in accordance with claim 7,
**characterized in that** the opening flap (16) is delimited by an outer edge (34) and **in that** the support arrangement (31) positively engages around the outer edge (34).

11. Exterior cladding component (12) in accordance with any of claims 7 to 10, **characterized in that** the support arrangement (31) is connected to the main body (20) in segments.

12. Exterior cladding component (12) in accordance with any of claims 7 to 11, **characterized in that** the connection structure (28) comprises at least one receiving section (42) for components of the motor vehicle (10).

13. Exterior cladding component (12) in accordance with any of claims 7 to 12, **characterized in that** the exterior cladding component (12) is implemented as a bumper and the opening flap (16) is implemented as an air flap (18).

14. Motor vehicle (10) comprising an exterior cladding component (12) in accordance with any of claims 7 to 13.

## Revendications

1. Structure de raccordement (28) pour relier un actionneur (33) à un clapet d'ouverture (16) pour ouvrir et fermer un composant de revêtement extérieur (12) d'un véhicule automobile (10),
la structure de raccordement (28) :
- comprend un clapet d'ouverture (16), et
- au moins un dispositif de support (31) avec des supports reliés au clapet d'ouverture (16), et
- au moins un segment de liaison (32) installé sur le dispositif de support (31) par lequel le clapet d'ouverture (16) peut être relié à l'actionneur (33) pour déplacer le clapet d'ouverture (16),
structure **caractérisée en ce que**
le clapet d'ouverture (16) est délimité par un bord extérieur (34) et le dispositif de support (31) comporte au moins une traverse (36) dont les deux extrémités sont dans la région du bord extérieur (34).

2. Structure de raccordement (28) selon la revendication 1, **caractérisée en ce que**
le clapet d'ouverture (16) est délimité par un bord extérieur (34) et le dispositif de support (31) comporte au moins un support extérieur (35) qui suit le tracé du bord extérieur (34).

3. Structure de raccordement (28) selon la revendication 2, **caractérisée en ce que**
le dispositif de support (31) comporte au moins un support auxiliaire (38) dont une extrémité est dans la région du bord extérieur (34).

4. Structure de raccordement (28) selon les revendications 2 ou 3, **caractérisée en ce que**
le support extérieur (35), la traverse (36) et/ou le support auxiliaire (38) sont reliés.

5. Structure de raccordement (28) selon la revendication 4, **caractérisée en ce que**
au moins une nervure de rigidification (44) est prévue sur le support extérieur (35), sur la traverse (36) et/ou sur le support auxiliaire (38).

6. Structure de raccordement (28) selon l'une des revendications précédentes,
**caractérisée en ce que**
le segment de liaison (34) comprend une articulation de rotation ou une articulation à rotule reliant le clapet d'ouverture (16) à l'actionneur (33) pour déplacer le clapet d'ouverture (16).

7. Composant de revêtement extérieur (12) d'un véhicule automobile (10) comprenant :
- un clapet d'ouverture (16),
* formé par le composant de revêtement extérieur (12) et mobile par rapport au composant de revêtement extérieur (12), ou
* fixé par un élément de fixation (43) de manière mobile au composant de revêtement extérieur (12) et qui est logée dans un passage (45) au composant de revêtement extérieur (12),
- un actionneur (33) qui déplace le clapet d'ouverture (16) entre une position ouverte dans laquelle le clapet d'ouverture (16) ouvre la pièce d'habillage ou le passage (45) et une position de fermeture dans laquelle le clapet d'ouverture (16) ferme le composant de revêtement extérieur (12) ou le passage (45),
composant de revêtement extérieur **caractérisé en ce que**
- elle comporte une structure de raccordement (28) selon l'une des revendications précédentes, qui coopère avec le clapet d'ouverture (16), et l'actionneur (33) est relié par le segment de liaison (32) à la structure de raccordement (28).

8. Composant de revêtement extérieur (12) selon la revendication 7, **caractérisé en ce que**
le clapet d'ouverture (16) comprend :
- un corps de base, plat (20) ayant un premier côté (22) et un second côté (24),
- le premier côté (22) est le côté apparent (26) visible de l'extérieur, et
- le dispositif de support (31) est relié par le second côté (24) au corps de base (20).

9. Composant de revêtement extérieur (12) selon la revendication 7, **caractérisé en ce que**
le dispositif de support (31) est relié par le second côté (24) au corps de base (20) par collage, soudage ou enclipsage.

10. Composant de revêtement extérieur (12) selon la revendication 7, **caractérisé en ce que**
le clapet d'ouverture (16) est délimité par un bord extérieur (34) et le dispositif de support (31) entoure le bord extérieur (34) par une liaison par la forme.

11. Composant de revêtement extérieur (12) selon l'une des revendications 7 à 10,
**caractérisé en ce que**
le dispositif de support (31) est relié par segments au corps de base (20).

12. Composant de revêtement extérieur (12) selon l'une des revendications 7 à 11,
**caractérisé en ce que**
la structure de liaison (28) comprend au moins un segment récepteur (42) pour des composants du véhicule automobile (10).

13. Composant de revêtement extérieur (12) selon l'une des revendications 7 à 12,
**caractérisé en ce que**
le composant de revêtement extérieur (12) est réalisée sous la forme d'un parechoc et le clapet d'ouverture (16) sous la forme d'un clapet de ventilation (18).

14. Véhicule automobile (10) comprenant un composant de revêtement extérieur (12) selon l'une des revendications 7 à 13.
